Europäisches Patentamt

European Patent Office

Office européen des brevets

(19)

(11) Veröffentlichungsnummer: **0 141 165**
**A2**

(12)

# EUROPÄISCHE PATENTANMELDUNG

(21) Anmeldenummer: 84110668.5

(22) Anmeldetag: 07.09.84

(51) Int. Cl.⁴: **F 02 B 27/00**
**F 02 D 13/02**

(30) Priorität: 26.10.83 DE 3338870

(43) Veröffentlichungstag der Anmeldung:
15.05.85 Patentblatt 85/20

(84) Benannte Vertragsstaaten:
DE FR GB IT SE

(71) Anmelder: BAYERISCHE MOTOREN WERKE
Aktiengesellschaft
Postfach 40 02 40 Petuelring 130
D-8000 München 40(DE)

(72) Erfinder: Bönisch, Heinz-Jürgen
Freilandstrasse 22
D-8038 Gröbenzell(DE)

(72) Erfinder: Brandl, Gerhard
Rotwandstrasse 3
D-8000 München 90(DE)

(72) Erfinder: Noor, Sybille
Elvirastrasse 13
D-8000 München 19(DE)

(72) Erfinder: Öhling, Karl-Heinz
Schwarzhölzlstrasse 8
D-8047 Karlsfeld(DE)

(72) Erfinder: Riedl, Walter
Klarastrasse 28
D-8000 München 19(DE)

(72) Erfinder: Theissen, Mario
Puchheimer Strasse 41
D-8000 München 50(DE)

(72) Erfinder: Wodiczka, Ernst
Berg-am-Laim-Strasse 137a
D-8000 München 80(DE)

(74) Vertreter: Schweiger, Erwin
Bayerische Motoren Werke Aktiengesellschaft Postfach
40 02 40 Petuelring 130 - AJ-30
D-8000 München 40(DE)

(54) Vorrichtung zum Steuern des Ladungswechsels bei Brennkraftmaschinen.

(57) Eine Vorrichtung zum Steuern des Ladungswechsels einer Brennkraftmaschine (1) umfaßt ein Einlaßventil (4) und ein Auslaßventil (3) als Hauptsteuerorgane sowie eine in der Ansauganlage (5) angeordnete Blende (6) als Zusatzsteuerorgan. Bei niederen Drehzahlen und Vollast der Maschine (1) wird die Blende (6) so gesteuert, daß sie in der Endphase eines Ansaugvorganges einen Querschnitt in der Ansauganlage (5) (Schwingrohr 11) rasch öffnet. Damit wird eine erhöhte Geschwindigkeit des Frischgasstromes und eine Druckwelle vor Einlaß-Schluß erreicht, die die Zylinderfüllung steigert. Dieses hohe Druckniveau kann durch vorzeitiges Schließen des Zusatzsteuerorgans (Blende 6) zwischen diesem und dem jeweiligen Hauptsteuerorgan (Einlaßventil 4) in der Ansauganlage (5) bzw. dem Schwingrohr (11) aufrechterhalten werden.

Eine bevorzugte Ausgestaltung umfaßt eine auf einer Drehwelle symmetrisch angeordnete Klappe, die mit einem elektromagnetischen Drehsteller in Antriebsverbindung steht, der die Klappe mit sehr hohen Drehbeschleunigungen und Verzögerungen schwingend oder/und rotierend antreibt. Eine kennfeldgesteuerte, motorisch angetriebene Klappe kann neben der Erhöhung der Vollast-Zylinderfüllung bei niederen Drehzahlen auch zur Teillaststeuerung der Brennkraftmaschine (1) dienen.

Fig. 1

Vorrichtung zum Steuern des Ladungswechsels bei Brennkraftmaschinen

Die Erfindung geht gemäß dem Oberbegriff des Anspruches 1
von der DE-C 156 010 aus.

Bei dieser bekannten Bauart sind ein Tellerventil und ein
Kolbenschieber zur Steuerung für den Einlaß und den Auspuff bei einer Brennkraftmaschine kombiniert. Für den
Einlaß ist die Vorrichtung zum Steuern des Ladungswechsels
so ausgelegt, daß während des Betriebes der Maschine das
Mengenverhältnis von Luft und Brennstoffluftgemisch geregelt wird.

Gegenstand der DE-C-665 606 sowie der DE-A-26 21 362 ist
jeweils eine Vorrichtung zur Last- bzw. Füllungsregelung
einer Brennkraftmaschine, wobei den Einlaßventilen als
Hauptsteuerorgane einer Mehrzylinder-Brennkraftmaschine in
der Ansauganlage ein für alle Ansaugleitungen gemeinsamer
Drehschieber als Zusatzsteuerorgan vorgeschaltet ist. Beim
Öffnen eines Einlaßventiles ist die zugehörige Ansaugleitung an ihrer schieberseitigen Mündung über den gesamten
Querschnitt durch den Drehschieber geöffnet. Zur Last-
bzw. Füllungsregelung wird das Ende des Ansaugvorganges
jedoch nicht durch das Einlaßventil bestimmt, sondern
durch den Drehschieber. Dieser verschließt betriebspunktabhängig gesteuert vor "Einlaßventil schließt" die Ansaugleitung.

Eine ähnliche Vorrichtung zeigt und beschreibt die DE-A 29 38 118, bei der in jeder Ansaugleitung einer Mehrzylinder-Brennkraftmaschine stromauf eines Einlaßventiles ein Drehschieber als Einlaßdrosselorgan angeordnet ist, dessen Steuerzeiten in Bezug auf das Einlaßventil veränderbar sind.

Schließlich ist aus der DE-C 476 624 eine Vorrichtung für eine Viertakt-Dieselmaschine bekannt, bei der einem Einlaßventil ein Steuerschieber vorgeschaltet ist, der die Ansaugleitung abwechselnd mit der Umgebungsluft und mit einem Sammelraum für vorverdichtete Ladeluft verbindet. Die Nachladung erfolgt am Ende des Ansaugtaktes und zu Beginn des Verdichtungstaktes im UT-Bereich des Kolbens. Weiter wird der Steuerschieber so gesteuert, daß nach dem Nachladevorgang die Saugleitung zwischen Steuerschieber und Einlaßventil mit Luft höheren Druckes gefüllt wird. Diese Luft von geringem Überdruck verhindert beim Öffnen des Einlaßventiles ein Rückströmen von Abgasen in die Ansaugleitung.

Bekanntlich bleibt bei niederen Drehzahlen und hoher Last die Frischgasladung bei Brennkraftmaschinen mit relativ langen Öffnungszeiten des Einlaßorgans zum einen wegen des rückströmenden Abgases bei öffnendem Einlaßorgan und zum anderen wegen des vom Kolben zurückgeschobenen Frischgasanteiles bei schließendem Einlaßorgan deutlich unter der dem Hubvolumen entsprechenden Menge. Dementsprechend ungünstig ist der Drehmomentverlauf der Brennkraftmaschine. Weiter wird die Füllung der Zylinder mit Frischgas bei geringem Durchsatz der Maschine sowohl in Vollast als auch in Teillast durch die Restgase vermindert.

Der Erfindung liegt die Aufgabe zugrunde, die eingangs beschriebene Vorrichtung zum Steuern des Ladungswechsels so auszubilden, daß die Füllung der Zylinder mit Frischgas durch Beeinflussen der gasdynamischen Vorgänge verbessert wird.

Diese Aufgabe wird für den Betrieb einer Brennkraftmaschine bei niederen Drehzahlen und hoher Last durch die kennzeichnenden Merkmale des Anspruches 1 gelöst. Mit der Erfindung ist eine Steuerung des Zusatzsteuerorgans relativ zum zugehörigen Hauptsteuerorgan in der Ansaugleitung aufgezeigt, durch die die Ansaugleitung bei niedrigen Drehzahlen mittels des Zusatzsteuerorgans über den weitaus größten Teil des Ansaugtaktes verschlossen ist und die erst in der Endphase des Ansaugvorganges voll geöffnet wird. In den für Frischgasströme für hohe Last bei hohen Drehzahlen ausgelegten Ansaugleitungen werden /dadurch Frischgasströme von so hohen Geschwindigkeiten erreicht, daß die damit erzielte Wellendynamik bei niedrigen Drehzahlen und hoher Last hohe Füllungen ergibt. Verbunden damit ist in den niederen Drehzahlen der Vollast ein bedeutender Zugewinn an Drehmoment. Der Verlauf des Drehmomentes kann bis zum üblichen Drehmomentmaximum in den mittleren Drehzahlen günstig beeinflußt werden, einerseits durch ein Zusatzsteuerorgan mit steilem Querschnittsanstieg beim Öffnen des Ansaugleitungs-Querschnittes; andererseits nach Anspruch 2 dadurch, daß der bei niedrigster Drehzahl und geöffnetem Einlaßventil kurz vor UT des ansaugenden Kolbens gelegte Öffnungsbeginn des Zusatzsteuerorgans mit zunehmender Drehzahl gegen den Öffnungsbeginn des Einlaßventiles verschoben wird. Wird das Zusatzsteuerorgan schließlich so gesteuert, daß es unmittelbar vor dem Einlaßventil schließt, kann damit eine Speicherung des bei Einlaßschluß herrschenden Druckniveaus in der Ansaugleitung erreicht werden. Beim Öffnen des Einlaßventiles in niederen Drehzahlen bei hoher Last - wobei das Zusatzsteuerorgan die Ansaugleitung verschließt - strömt zunächst aufgrund des erhöhten Druckniveaus in der verschlossenen Ansaugleitung Frischgas in den Zylinder ein. Damit ist eine die Füllung vermindernde Rückströmung von Abgasen vermieden und ferner die Restgasausbringung aus dem Zylinder begünstigt. Vorzugsweise wird das Zusatzsteuerorgan in einem solchen Abstand vom zugehörigen Haupt-

- 4 -

steuerorgan (Einlaßventil) angeordnet, daß die Frischgasführung zwischen diesen Organen als Schwingrohr dient
(Anspruch 3). Damit kann der Drehmomentverlauf im oberen
Drehzahlbereich bei hoher Last (Vollast) mit den bekannten
Mitteln, z.B. dem aus der Nockenwellen- und Saugrohr-Abstimmung resultierenden dynamischen Ladeeffekt , bei voll
geöffnetem und beispielsweise stillgelegtem Zusatzsteuerorgan günstig gestaltet werden.

Mit der "dynamischen Blende" nach der Erfindung wird bei
niederen Drehzahlen und hoher Last eine erhöhte Geschwindigkeit des Frischgasstromes und eine Druckwelle vor Einlaß-Schluß des Hauptsteuerorgans erreicht, die die Zylinderfüllung steigert. Dieses hohe Druckniveau kann durch
vorzeitiges Schließen des Zusatzsteuerorgans bzw. der
"dynamischen Blende" in der Ansaugleitung aufrechterhalten
werden.

Die der Erfindung zugrundeliegende Aufgabe der Verbesserung der Füllung der Zylinder mit Frischgas kann nicht nur
ansaugseitig, sondern auch abgasseitig mit den kennzeichnenden Merkmalen des Nebenanspruches (Anspruch 6) gelöst
werden. Bekanntlich umfaßt eine Auspuffphase einen Vorauslaßstoß der hochgespannten Gase und das darauf folgende,
vom Kolben bewirkte Ausschieben der Verbrennungsgase. Bei
geringem Gasdurchsatz der Maschine - Vollast bei niederen
Drehzahlen und Teillast - ist der Druck- und Massenstromverlauf zwischen diesen beiden Ausströmvorgängen besonders
ungünstig. Verschließt das Zusatzsteuerorgan gemäß Anspruch 7 die Abgasleitung zwischen diesen beiden Ausströmvorgängen einer Auspuffphase, wird stromab des geöffneten
Auslaßventiles (Hauptsteuerorgan) in dem Abgasleitungsteil
vor dem geschlossenen Zusatzsteuerorgan ein Druck aufgebaut. Beim raschen Öffnen des Zusatzsteuerorgans wird
dadurch eine am Auslaßventil wirksame Saugwelle erzeugt,
die das Ausbringen der Verbrennungsgase vorteilhaft unterstützt und damit die Restgasmenge im Zylinder vermindert.

Nach einem weiteren Vorschlag der Erfindung gemäß Anspruch 8 kann die Restgasmenge schließlich dadurch vermindert werden, daß das bei öffnendem Auslaßventil (Hauptsteuerorgan) voll offen gesteuerte Zusatzsteuerorgan zeitlich vor dem Schließpunkt des Auslaßventils die Abgasleitung verschließt. Vermieden wird dadurch ein Rückströmen des Abgases, das insbesondere bei öffnendem Einlaßventil durch das ansaugseitig geringere Druckniveau ausgelöst wird. Mit dem abgasseitig angeordneten und gemäß der Erfindung relativ zum zugeordneten Hauptsteuerorgan (Auslaßventil) gesteuerten Zusatzsteuerorgan können einerseits am offenen Hauptsteuerorgan wirkende Saugwellen erzeugt und andererseits rücklaufende, das Ausströmen des Abgases am Hauptsteuerorgan behindernde Druckwellen abgehalten werden. Diese zu verringerten Restgasmengen im Zylinder führenden Maßnahmen bewirken dadurch eine verbesserte Füllung des Zylinders mit Frischgas.

Eine weitere Verbesserung der Frischgasfüllung ist schließlich gemäß Anspruch 10 durch Kombination von ansaugseitig mit abgasseitig angeordnetem und erfindungsgemäß gesteuerten Zusatzorganen zu erzielen.

Eine bevorzugte Ausgestaltung der dynamischen Blende für ansaugseitige oder/und abgasseitige Anordnung zur Verbesserung der Zylinderfüllung mit Frischgas durch Beeinflussung gasdynamischer Vorgänge ist in den Ansprüchen 12 mit 17 beschrieben. Bei dieser für eine Serienverwendung bevorzugten Ausgestaltung ist das Zusatzorgan eine vorzugsweise auf einer Drehwelle symmetrisch angeordnete Klappe, die mit einem elektromagnetischen Drehsteller in Antriebsverbindung steht. Der Drehsteller neuer Technologie bewirkt an der Klappe sehr hohe Drehbeschleunigungen und Verzögerungen. Er kann die relativ dicht in der jeweiligen Leitung angeordnete Klappe rasch zwischen vorbestimmten Drehwinkelstellungen bzw. Positionen hin- und herbewegen zur Erzielung eines dem jeweiligen Betriebs-

punkt (Last, Drehzahl) der Brennkraftmaschine angepaßten Strömungsquerschnittes in der Leitung. Bei Freigabe eines maximalen Strömungsquerschnittes schwingt die Klappe zwischen der Schließ- und der größten Offenstellung, dem ein Öffnungswinkel von ca. 90° entspricht. Für kleinere Strömungsquerschnitte schwingt die Klappe entsprechend weniger weit auf. Dieser Drehsteller ist ferner in der Lage, die Klappe ohne Überschwingen in die vorbestimmte Position einer Offenstellung zu bringen, so daß für den jeweiligen Betriebspunkt exakt der zugehörige freie Strömungsquerschnitt erreicht wird. Ein weiterer Vorteil des Drehstellers ist ferner, daß er die Klappe in einer vorbestimmten Offenstellung hält. Eine mit einem derartigen Drehsteller kombinierte Klappe kann in weiterer vorteilhafter Weise kennfeldgesteuert die Strömungsquerschnitte freigeben in den jeweiligen ansaug- oder/und abgasseitigen Leitungen. Mit der Steuerung oder Regelung des Klappenantriebes durch ein Maschinen-Kennfeld sowie weiteren, maschinenexternen Parametern wie beispielsweise Kraftstoffverbrauch, Schadstoffanteile, kann ferner der Öffnungsquerschnittsanstieg, die Verweildauer in der jeweiligen Offenstellung und der Schließquerschnittsverlauf der Klappe sowie die Zuordnung des Beginnes und der Dauer des Klappenzeitquerschnittes zu dem Zeitquerschnitt des Einlaß- oder/und Auslaßventiles optimal gewählt werden. Bei einer Klappe mit einem durch interne (Kennfeld) und externe Parameter gesteuerten Drehsteller kann weiter die Öffnungscharakteristik in einem Betriebspunkt zur Abstimmung auf gasdynamische Vorgänge auf verschiedene Weise realisiert werden. So kann die Klappe in relativ kurzer Zeit den gesamten Leitungsquerschnitt freigeben und wieder verschließen. Weiter ist eine teilweise Freigabe des Leitungsquerschnittes denkbar, die relativ langsam erfolgen kann, wobei die Klappe nach Erreichen der vorbestimmten Teil-Offenstellung die Leitung rasch oder langsam verschließt. Möglich ist ferner eine relativ rasche Teilfreigabe des Leitungsquerschnittes, wobei die Klappe anschließend in der erreichten Teil-Offenstellung eine vorbestimmte Zeit verweilt und dann rasch oder langsam schließt.

Aus den vorstehenden Ausführungen ergibt sich, daß ein eine vorzugsweise kennfeldgesteuerte, motorisch angetriebene Klappe umfassendes Zusatzorgan nicht nur zur Erhöhung der Vollast-Zylinderfüllung bei niederen Drehzahlen vorteilhaft ist, sondern auch zur Teillaststeuerung der Brennkraftmaschine vorteilhaft Verwendung finden kann, wobei die Klappe hierbei zugleich als Drosselorgan dient. Die die Ansaugleitung ganz oder teilweise periodisch oder aperiodisch bei relativ großem Unterdruck freigebende Klappe bewirkt gewissermaßen "portionierte"·Ladungen für jeden Brennraum, die in diesen mit erhöhten Geschwindigkeiten einströmen. Dies ergibt erhöhte Turbulenzen im Einlaßsystem und im Brennraum, die in vorteilhafter Weise die Verbrennung und die Gemischaufbereitung wesentlich verbessern. Erreicht wird damit eine Senkung des Kraftstoffverbrauches bei besserer Motorelastizität. Weiter erfolgt mit der besseren Verbrennung in der Teillast eine deutliche Reduzierung der Schadstoffe im Abgas. Schließlich ergibt sich für die Maschine ein günstiger Wirkungsgrad. Da hierfür die Einlaßturbulenzen von wesentlicher Bedeutung sind, kann zu deren zusätzlicher Beeinflussung die Klappe bei einem Öffnen-Schließen-Zyklus ungleichförmig beschleunigt bzw. bewegt werden. Ferner kann sie bei Betrieb unter konstanter Last beispielsweise zur Korrektur vorgegebener Abgasemissionswerte aperiodisch betätigt werden. Die erfindungsgemäße Klappe erfüllt ferner alle Funktionen bekannter Turbulenzsysteme ohne den Nachteil eines erheblichen konstruktiven Bauaufwandes mit dem Vorteil des Fortfalles dadurch bedingter Einbußen in der Maximalleistung der Brennkraftmaschine. Zusätzlich zur betriebspunktmäßigen Steuerung oder Regelung der Turbulenz in Ansaugsystem und Brennraum ergibt sich mit der Klappe auch eine betriebspunktmäßige Beeinflussung des Einlaßdralles, der sich vorteilhaft auf Gemischaufbereitung und Verbrennungsablauf und damit verbrauchssenkend auswirkt. Für einen gewünscht hohen Einlaßdrall wird die Ansaugleitung von der Klappe, kurzzeitig unmittelbar vor dem Schließen des Einlaßventiles zum Brennraum auf vollen Querschnitt geöffnet.

Mit einer Klappe, die von einem elektromagnetischen Drehsteller mit sehr hoher durchschnittlicher Winkelgeschwindigkeit von ca. 2 (rad/ms) angetrieben wird, kann insbesondere eine Ansaugleitung oder ein Ansaugsystem im gesamten Betriebsbereich der Brennkraftmaschine während des dynamischen Betriebes entsprechend dem jeweiligen Betriebspunkt kurzzeitig beim Ansaugtakt geöffnet und für den übrigen Teil des Arbeitsspieles verschlossen gehalten werden. Durch Steuern oder Regeln der Zeitpunkte für Öffnen und Schließen der Klappe in Bezug auf das Öffnen und Schließen des zugeordneten Einlaßventiles sowie des Öffnungsgrades der Klappe können Ladungswechselarbeit, Wirkungsgrad, Gemischaufbereitung und Abgasemissionen gegenüber einer variablen Ventilsteuerung mit geringerem mechanischem Aufwand günstig beeinflußt werden. Dient die Klappe ferner zugleich als Drosselklappe, kann sie die Funktionen der bekannten elektronisch gesteuerten Drosselklappe voll übernehmen, womit eine elektronische Motorleistungssteuerung oder -regelung erzielt wird. Bei geringerem elektronischen Aufwand können eine oder mehrere der erfindungsgemäßen Klappen mit einer im Ansaugsystem ange- ordneten, willkürlich betätigbaren Drosselklappe kombi- niert werden.

In der Zeichnung ist die Erfindung anhand schematisch gezeigter Ausführungsbeispiele dargestellt. Es zeigen

Fig. 1      eine Steuervorrichtung für den Ladungswechsel
            einer Mehrzylinder-Hubkolben-Brennkraftmaschine
            mit einem ansaugseitigen Zusatzsteuerorgan,

Fig. 2     ein Diagramm der Zeitquerschnitte von Haupt- und Zusatzsteuerorgan der Steuervorrichtung nach Fig. 1,

Fig. 3     ein Diagramm für den Drehmomentenverlauf der Brennkraftmaschine nach Fig. 1 mit und ohne Steuervorrichtung,

Fig. 4     eine weitere Steuervorrichtung mit einem ansaugseitigen Zusatzsteuerorgan,

Fig. 5     eine Steuervorrichtung mit einem abgasseitig angeordneten Zusatzsteuerorgan und

Fig. 6     ein Steuerdiagramm des Zusatzsteuerorgans in der Auspuffphase.

Fig. 7     ein weiteres Ausführungsbeispiel einer Ladungswechsel-Steuervorrichtung mit Schwing-Klappen im Ansaugsystem einer Mehrzylinder-Brennkraftmaschine,

Fig. 8     ein Diagramm der Zeitquerschnitte von Einlaßventil und Schwing-Klappe nach Fig. 7,

Fig. 9     ein weiteres Ausführungsbeispiel mit mehreren, in einer Ebene eines Leitungsquerschnittes angeordneten Schwing- Klappen.

Eine Viertakt-Hubkolben-Brennkraftmaschine 1 weist in einem Zylinder 2 ein Auslaßventil 3 und ein Einlaßventil 4 auf. Stromauf des Einlaßventiles 4 ist in einer Ansauganlage 5 eine Blende 6 angeordnet. Zusammen mit dem Einlaßventil 4 und dem Auslaßventil 3 als Hauptsteuerorgane bildet die Blende 6 als Zusatzsteuerorgan eine Vorrichtung zum Steuern des Ladungswechsels bei hoher Last in niederen Drehzahlen der Brennkraftmaschine 1.

Die Ansauganlage 5 umfaßt einen Luftsammler 7, der mit Ansaugleitungen 8, 9 und 10 für eine Gruppe von Zylindern 2 durch ein Schwingrohr 11 verbunden ist. Nahe dem Luftsammler 7 ist die Blende 6 in dem Schwingrohr 11 angeordnet.

Die Blende 6 umfaßt zwei drehbeweglich angeordnete Blendenscheiben 12 und 13 mit Ausnehmungen 14 und 15 sowie eine Antriebsvorrichtung 16. Die Antriebsvorrichtung 16 kann von der Brennkraftmaschine 1 oder gesondert angetrieben sein. Die Blendenscheiben 12 und 13 der zur besseren Übersicht in Explosionsdarstellung gezeigten Blende 6 können gleich- und/oder gegensinnig angetrieben sein. Die Steuerung der Blendenscheiben 12 und 13 für die Zuordnung der Blenden-Ausnehmungen 14 und 15 für den jeweiligen Öffnungsbeginn des Schwingrohres 11 relativ zum Öffnungsbeginn des Einlaßventiles 4 sowie für die Öffnungsdauer des Schwingrohres 11 relativ zur Öffnungsdauer (Zeitquerschnitt) des Einlaßventiles 4 wird durch die Antriebsvorrichtung 16 bewirkt.

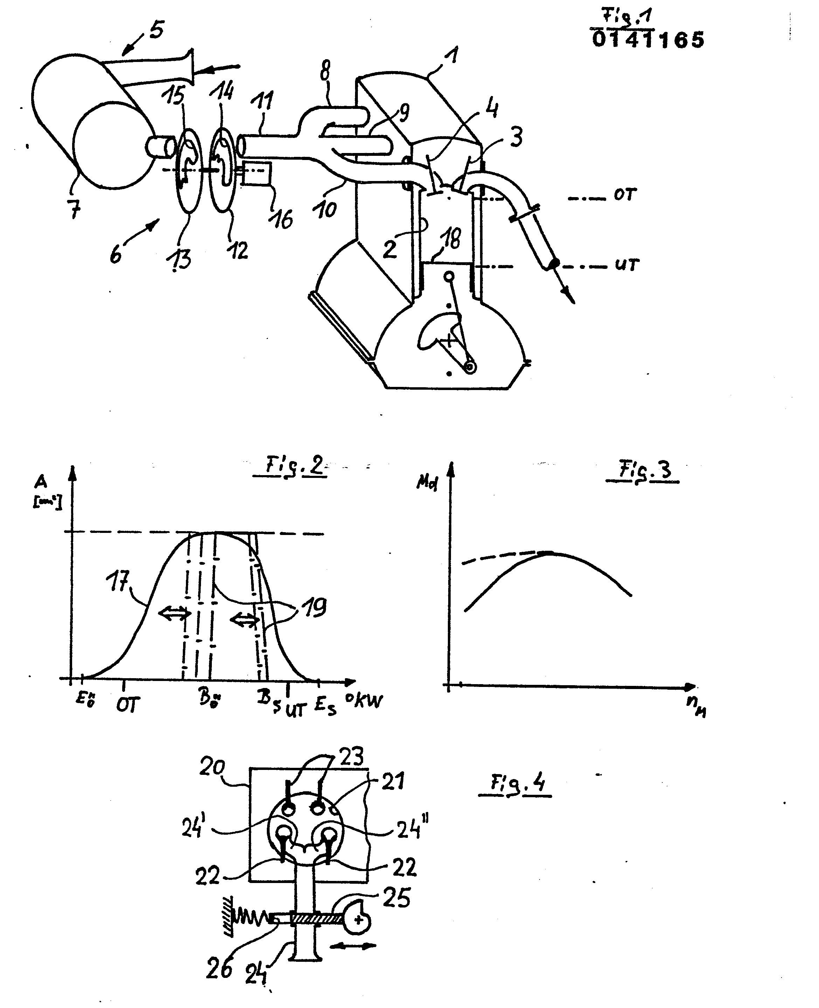

Wirkungsweise:
Eine Kurve 17 in Fig. 2 gibt den Zeitquerschnitt des Einlaßventiles 4 beim Ansaugvorgang der Brennkraftmaschine 1 an. Das Einlaßventil 4 öffnet vor dem OT des im Zylinder 2 oszillierenden Kolbens 18 und schließt nach UT des Kolbens 18.

Beim Öffnen des Einlaßventiles 4 in niederen Drehzahlen und hoher Last der Brennkraftmaschine 1 ist das Schwingrohr 11 durch die Blende 6 abgesperrt, so daß nur die stromab der Blende 6 in der Ansauganlage 5 vorhandene, relativ geringe Luftmasse in den Zylinder 2 einströmt. Mit fortschreitender Abwärtbewegung des Kolbens 18 im Zylinder 2 von OT nach UT ergibt sich daher ein relativ starker Unterdruck. Durch Steuerung der Blende bzw. des Zusatzorgans wird der Querschnitt des Schwingrohres 11 bei niedri-

- 11 -                                    0141165

gen Maschinendrehzahlen und hoher Last so freigegeben, daß der herrschende Unterdruck einen Frischgasmassenstrom von hoher Geschwindigkeit erzeugt. Dieser Frischgasmassenstrom bewirkt zum einen eine hohe Füllung des Zylinders 2 und zum anderen eine starke Wellendynamik in der Ansaugleitung, die Rückströmen von Zylinderladung verhindert. Der mit der hohen Füllung in niederen Drehzahlen erreichbare Vollast-Drehmomentenverlauf ist in Fig. 3 anhand des gestrichelten Linienzuges skizziert.

In Fig. 2 gibt eine trapezähnliche Kurve 19 den Zeitquerschnitt der Blende 6 für den oben beschriebenen Vorgang bei einer Maschinendrehzahl $n_M = 1.000$ min$^{-1}$ an. Diese Kurve 19 zeigt, daß die Blende 6 einen steilen Querschnittsöffnungsanstieg und einen steilen Querschnittsöffnungsabfall aufweist. Damit sind Drosselungen des Frischgasstromes weitestgehend vermieden.

Weiter zeigt die Kurve 19, daß die Blende 6 unmittelbar vor dem Einlaßventil 4 schließt. Damit wird zwischen beiden Organen 4 und 6 ein relativ hohes Druckniveau gehalten, das beim Öffnen eines der Einlaßventile 4 in der Gruppe der Zylinder 2 eine die Füllung des jeweiligen Zylinders 2 vermindernde Rückströmung an Zylinderladung in die Ansauganlage 5 vermeidet.

Schließlich zeigt Fig. 2, daß mit steigender Maschinendrehzahl (und hoher Last) der Öffnungsbeginn der Blende 6 zunehmend früher vor UT des Kolbens 18 gelegt bzw. hin zum Öffnungsbeginn des Einlaßventiles 4 verschoben wird. Der Öffnungsschluß der Blende 6 kann konstant sein oder ebenfalls relativ zur Steuerzeit des Einlaßventiles 4 verschoben werden.

Mit der Querschnittsfreigabe in der Ansauganlage 5 der Brennkraftmaschine 1 durch die Blende 6 in der Endphase eines Ansaugvorganges bei niederen Drehzahlen und hoher Last wird die Geschwindigkeit des Frischgasstromes für eine gesteigerte Füllung des Zylinders 2 entsprechend angehoben und schließlich ein hohes Druckniveau bzw. eine Druckwelle vor Einlaß-Schluß des Einlaßventiles 4 angeregt.

Eine Hubkolben-Brennkraftmaschine 20 nach Fig. 4 weist für einen Zylinder 21 zwei Einlaßventile 22 und zwei Auslaßventile 23 auf. Stromauf der Einlaßventile 22 ist in einer Ansaugleitung (Schwingrohr) 24 eine oszillierende Blende 25 angeordnet. Diese steuert mit einer Ausnehmung 26 den Leitungsquerschnitt der Ansaugleitung 24.

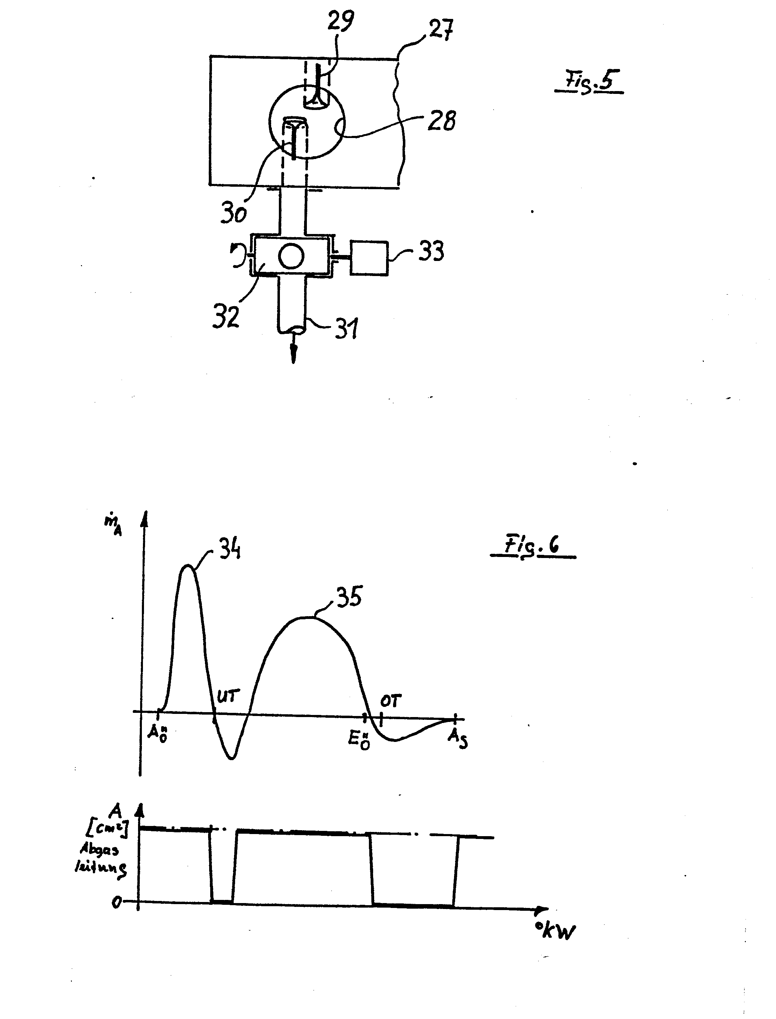

Eine Hubkolben-Brennkraftmaschine 27 nach Fig. 5 weist für einen Zylinder 28 ein Einlaßventil 29 und ein Auslaßventil 30 auf. Stromab des Auslaßventiles 30 ist in einer Abgasleitung 31 eine Blende 32 angeordnet. Diese steht mit einer Antriebsvorrichtung 33 in Verbindung, die von der Brennkraftmaschine 27 oder auch gesondert angetrieben sein kann.

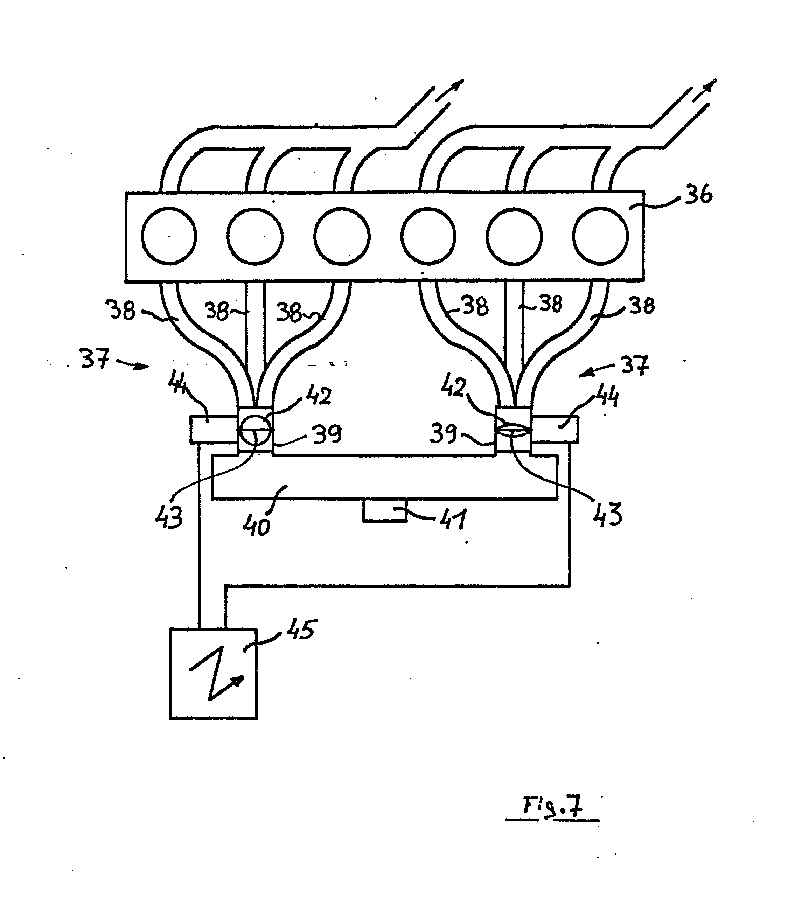

Dem Steuerdiagramm nach Fig. 6 für die Blende 32 ist der Verlauf eines Abgasmassenstromes während einer Auspuffphase bei geringem Ladungsdurchsatz der Brennkraftmaschine 27 zugeordnet. Durch kurzfristiges Verschließen der Abgasleitung 31 mittels der Blende 32 zwischen den beiden Massenstromspitzen gemäß den Kurven 34 und 35 können zum Auslaßventil 30 hin wirkende Druck- und Saugwellen beeinflußt werden. Um ein gegen Ende des Auspuffvorganges mögliches Rückströmen an Abgas in den Zylinder 28 zu unterbinden, verschließt die Blende 32 betriebspunktabhängig gesteuert die Abgasleitung 31 vor "Auslaßventil 30 schließt" bei etwa "Einlaßventil 29 öffnet".

Durch das abgasseitig angeordnete Zusatzsteuerorgan (Blende 32) kann das Ausströmen des Abgases bei geringem Durchsatz der Brennkraftmaschine 27 so gesteuert werden, daß in der Füllung der Anteil an Restgasmengen wesentlich verringert ist.

Schließlich kann eine Vorrichtung zum Steuern des Ladungswechsels einer im Viertakt- oder Zweitakt-Verfahren betriebenen Otto- oder Diesel-Brennkraftmaschine sowohl ein ansaugseitiges wie ein abgasseitiges Zusatzsteuerorgan (dynamische Blende) umfassen. Neben der aufgezeigten Anordnung eines Zusatzsteuerorgans in einem Leitungsteil, von dem die übrigen, gruppenweise angeordneten Leitungen abzweigen, kann im Rahmen der Erfindung in jeder Einzelleitung ein Zusatzsteuerorgan angeordnet werden.

Eine mehrzylindrige Brennkraftmaschine 36 weist zu Gruppen 37 zusammengefaßte Ansaugleitungen 38 auf. Die Leitungen 38 jeder Gruppe 37 münden in einen Stutzen 39, der mit einem Luftsammler 40 in Verbindung steht. Der Luftsammler 40 weist einen Einlaß 41 auf. In jedem Stutzen 39 ist eine Klappe 42 vorgesehen, die auf einer Drehwelle 43 symmetrisch angeordnet ist. Jede Klappe 42 verschließt den Leitungsquerschnitt im jeweiligen Stutzen 39 relativ dicht. Jede der Klappen 42 steht über ihre Drehwelle 43 mit einem elektromagnetischen Drehsteller 44 in Antriebsverbindung. Die Drehsteller 44 sind im Gegensatz zu herkömmlichen Stellmotoren in der Lage, die Klappe 42 mit einer mittleren Mindestwinkelgeschwindigkeit $\omega \simeq 2$ (rad/ms) anzutreiben. Sie sind ferner in der Lage, aufgrund ihres starken und konstanten Magnetfeldes jede Klappe 42 in einer vorbestimmten Winkelposition gegen die Kräfte der einströmenden Frischladung zu halten. Die in neuer Technologie ausgeführten Drehsteller 44 stehen mit einer elektronischen Steuer- oder Regeleinrichtung 45 in Verbindung. In diese werden an internen Kenngrößen der Brennkraftmaschine 36 Parameter wie Last, Drehzahl, Zündung, Solldrehzahl und Temperatur eingespeist, ferner an externen Kenngrößen Verbrauch und Abgasemissionswerte. Weiter sind in der Steuer- oder Regeleinrichtung 45 Kennfelder der Brennkraftmaschine abgespeichert. Mittels der elektronischen Einrichtung 45 wird jede Klappe 42 bei einem Ansaugtakt zur Erzielung der gewünschten Füllung in dem betreffenden Betriebspunkt entsprechend kurz oder lang geöffnet. Die Drosselklappe 42 der linken Gruppe 37 ist in einer Offenstellung gezeigt, während die Klappe 42 der rechte Gruppe 37 in der üblichen Schließstellung dargestellt ist.

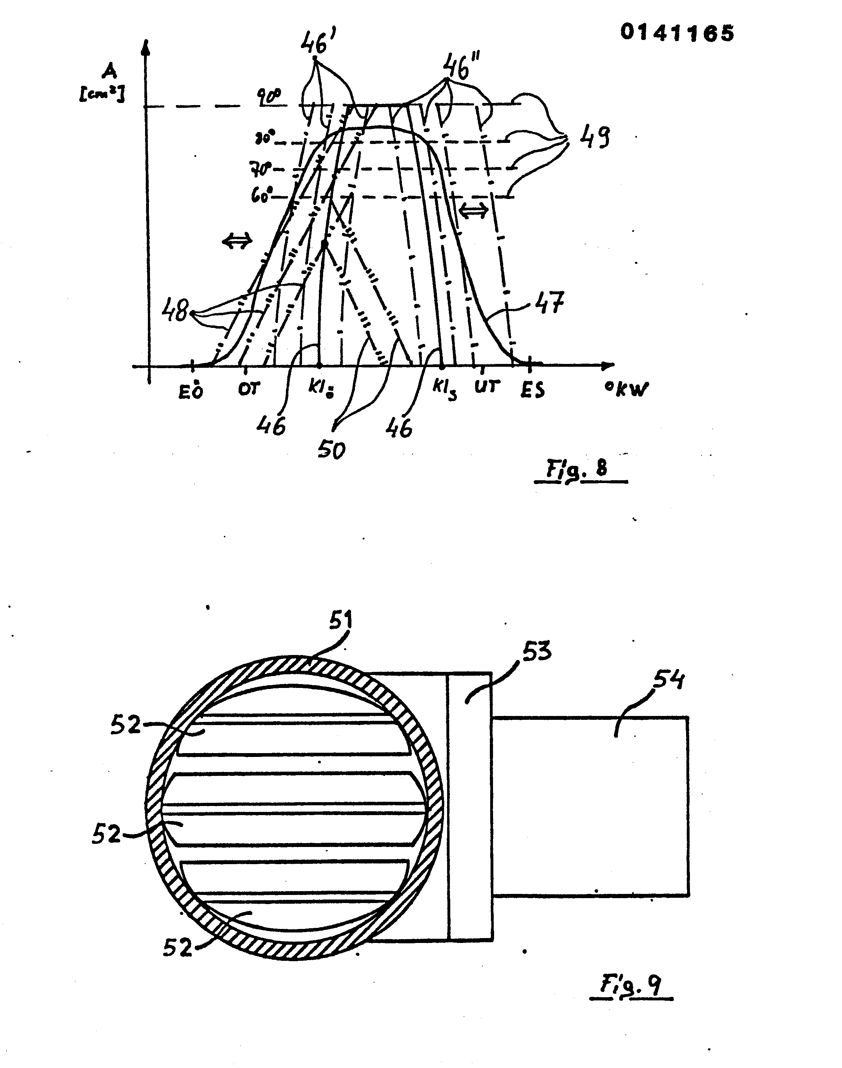

Jede Klappe 42 schwingt demnach von der Schließstellung in eine vorbestimmte Offenstellung und anschließend wieder in die Schließstellung zurück. Bei konstanter Last und Drehzahl und gleichbleibenden übrigen Parametern ergibt sich damit für eine Klappe 42 in Bezug auf einen zugeordneten Brennraum ein periodisches Öffnen und Schließen bzw. Schwingen zwischen den vorbestimmten Winkelpositionen. Dies bedeutet gemäß dem Diagramm nach Fig. 8, daß die Zeitpunkte für Öffnen und Schließen der Klappe 42 relativ zu den Zeitpunkten für Öffnen und Schließen des Einlaßventiles konstant bleiben. Dabei ist mit der Kurve 46 der Zeitquerschnitt der als dynamische Blende dienenden Klappe 42 veranschaulicht, während die Kurve 47 den Zeitquerschnitt eines Einlaßventiles zeigt. Tritt bei konstanter Last und Drehzahl der Brennkraftmaschine bei einem der externen Maschinenparameter, wie beispielsweise den Abgasemissionswerten eine Abweichung auf, so kann diese Abweichung durch aperiodisches Betätigen der Klappe 42 behoben werden, wobei die Zeitpunkte für Öffnen und Schließen der Klappe gegenüber denen des Einlaßventiles in gewünschter Weise laufend verändert werden, Kurven 46' und 46".

Zur Anpassung der Füllung an den jeweiligen Betriebspunkt ist es mit der elektronischen Einrichtung 45 ferner möglich, die steile Öffnungsanstiegsflanke 46' in eine flachere Anstiegsflanke 48 zu verändern. Weiter kann der von der schwingenden Klappe 42 freigegebene Strömungsquerschnitt im Stutzen 39 durch eine geringere Auslenkung aus der Schließstellung erreicht werden, wie dies die Kurven 49 darstellen. Dabei kann auch die Verweilzeit der Klappe 42 in der Offenstellung variiert werden. Bei den bisher erwähnten Zeitquerschnitten gemäß den Kurven 46 und 49 der Klappe 42 verweilt diese über eine vorbestimmte Zeit in der erreichten Winkelposition bzw. Offenstellung, bevor sie wieder schließt. Mit diesem Zeitverhalten werden insbesondere bei niedrigen Drehzahlen und hoher Last der Brennkraftmaschine 36 hohe Füllungen erzielt.

Wie aus der Fig. 8 weiter hervorgeht, kann die Klappe 42 nach Erreichen einer vorbestimmten Offenstellung durch die elektronische Einrichtung 45 sofort wieder in Schließstellung gesteuert werden, wie dies beispielsweise die Kurven 50 versinnbildlichen. Damit können beliebige Zeitquerschnitte der Klappe 42 verwirklicht werden. In Verbindung eines zum Zeitquerschnitt des Einlaßventiles variablen Öffnungszeitpunktes der Klappe 42 ergibt sich somit, daß mit der Klappe 42 auch die Füllung der Brennkraftmaschine im Teillastbetrieb gesteuert oder geregelt werden kann. Das dynamische Verhalten der durch einen Drehsteller 44 neuer Technologie angetriebenen Klappe 42 erlaubt es damit, die Brennkraftmaschine 36 im gesamten Betriebsbereich während des dynamischen Betriebes zu steuern oder zu regeln.

Die Klappe 42 kann nicht nur schwingend, sondern auch rotierend angetrieben sein. Wegen der gasdynamischen Vorgänge ist auch eine Kombination beider Antriebsarten an der Klappe 42 denkbar.

Anstelle einer einzigen Klappe 42 können in einem Querschnitt einer Leitung 51 nach Fig. 9 mehrere motorisch angetriebene Klappen 52 angeordnet sein. Die in einer Offenstellung gezeigten Klappen 52 sind in einer Querebene der Leitung 51 zueinander parallel angeordnet und überdecken sich in der Schließstellung (nicht gezeigt). Die Klappen 52 stehen über ein Zwischengetriebe 53 mit einem Drehsteller 54 der vorbeschriebenen Art in Antriebsverbindung.

- 1 -                              0141165

Patentansprüche:

1. Vorrichtung zum Steuern des Ladungswechsels bei Brennkraftmaschinen, insbesondere Viertakt-Brennkraftmaschinen,
   - mit Hauptsteuerorganen (Einlaßventile 4 bzw. 22, Auslaßventile 3 bzw. 23) und diesen zugeschalteten Zusatzorganen (Blende 6 bzw. 25),
   - deren Steuerzeiten veränderbar sind,
   dadurch gekennzeichnet,
   - daß ein ansaugseitig dem Hauptsteuerorgan (Einlaßventile 4 bzw. 22) vorgeschaltetes Zusatzsteuerorgan
(Blende 6 bzw. 25) insbesondere bei niederer Drehzahl
und hoher Last der Maschine (1 bzw. 20) in der Endphase der Öffnungszeit des Hauptsteuerorgans (Einlaßventile 4 bzw. 22) öffnet,
   - wobei der Öffnungsbeginn mit steigender Maschinendrehzahl sich zunehmend dem Öffnungsbeginn des Hauptsteuerorgans (Einlaßventile 4 bzw. 22) nähert.

2. Vorrichtung nach Anspruch 1,
   - insbesondere für Hubkolben-Brennkraftmaschinen (1
bzw. 20) mit Einlaßventilen (4 bzw. 22) und Auslaßventilen (3 bzw. 23) als Hauptsteuerorgane,
   - wobei das jeweilige Zusatzsteuerorgan (Blende 6 bzw.
25) einen steilen Öffnungsquerschnittanstieg und
einen dem Querschnitt der jeweiligen Leitung (Schwingrohr 11 bzw. 24) entsprechenden Öffnungsquerschnitt
aufweist,

dadurch gekennzeichnet,

- daß das ansaugseitige Zusatzsteuerorgan (Blende 6 bzw. 25) bei niederer Drehzahl und zugleich hoher Last kurz vor UT des ansaugenden Kolbens (18) öffnet und
- vor den Einlaßventilen (4 bzw. 22) schließt,
- wobei mit steigender Drehzahl der Öffnungsbeginn des Zusatzsteuerorgans (6 bzw. 25) zunehmend früher vor UT des ansaugenden Kolbens gesteuert bzw. dem Öffnungsbeginn der Einlaßventile (4 bzw. 22) genähert wird.

3. Vorrichtung nach einem der Ansprüche 1 und 2, dadurch gekennzeichnet, daß das Zusatzsteuerorgan (Blende 6 bzw. 25) in einem als Schwingrohr (11 bzw. 24) dienenden Teil einer Ansauganlage (5) im maschinenfernen Endbereich des Schwingrohres (11 bzw. 24) angeordnet ist.

4. Vorrichtung nach Anspruch 3, dadurch gekennzeichnet, daß das Zusatzsteuerorgan (Blende 6 bzw. 25) in einem Leitungsteil (Schwingrohr 11 bzw. 24) angeordnet ist, von dem die übrigen, gruppenweise angeordneten Ansaugleitungen (8, 9, 10 bzw. 24', 24") abzweigen.

5. Vorrichtung nach einem der Ansprüche 1 bis 3,
   - für eine Mehrzylinder-Brennkraftmaschine,
   dadurch gekennzeichnet,
   - daß ein einziges Zusatzsteuerorgan entsprechend der Zündfolge der Maschine mehrere Ansaugleitungen steuert.

6. Vorrichtung zum Steuern des Ladungswechsels bei Brennkraftmaschinen, insbesondere Viertakt-Brennkraftmaschinen,
   - mit Hauptsteuerorganen (Einlaßventil 29, Auslaßventil 30) und diesen zugeschalteten Zusatzsteuerorganen (Blende 32),

- deren Steuerzeiten veränderbar sind,
dadurch gekennzeichnet,

- daß ein abgasseitiges Zusatzsteuerorgan (Blende 32)
  bei geringem Ladungsdurchsatz der Maschine (27) eine
  Abgasleitung (31) zeitweise während der Öffnungszeit
  des Hauptsteuerorgans (Auslaßventil 30) verschließt,

- wobei die Schließzeit(en) zum Beeinflussen von zum
  Hauptsteuerorgan (Auslaßventil 30) hin wirkenden
  Druck- und Saugwellen last- und/oder drehzahlabhängig
  gesteuert ist/sind.

7. Vorrichtung nach Anspruch 6,
   - insbesondere für Hubkolben-Brennkraftmaschinen mit
     einem Einlaßventil (29) und einem Auslaßventil (30)
     als Hauptsteuerorgane,
   dadurch gekennzeichnet,
   - daß das Zusatzsteuerorgan (Blende 32) die Abgasleitung (31) bei geöffnetem Auslaßventil (30) und einer
     Kolbenstellung im UT-Bereich zu Beginn der Abgas-Ausschiebung durch den Kolben zeitweise verschließt.

8. Vorrichtung nach einem der Ansprüche 6 und 7, dadurch
   gekennzeichnet, daß das Zusatzsteuerorgan (Blende 32)
   die Abgasleitung (31) vor dem Auslaßventil (30) bei
   etwa "Einlaßventil (29) öffnet" verschließt.

9. Vorrichtung nach einem oder mehreren der Ansprüche 6
   bis 8,
   - wobei Abgasleitungen gruppenweise zusammengefaßt in
     eine Sammelleitung münden,
   dadurch gekennzeichnet,
   - daß in jeder Abgasleitung ein Zusatzsteuerorgan angeordnet ist und
   - diese derart gesteuert sind,
   - daß während des Auspuffvorganges in jeweils eine der
     Abgasleitungen die übrigen Abgasleitungen durch die
     Zusatzsteuerorgane abgesperrt sind.

10. Vorrichtung nach mehreren der Ansprüche 1 bis 9, dadurch gekennzeichnet,

- daß sowohl ansaugseitig ein Zusatzsteuerorgan (Blende 6 bzw. 25) angeordnet ist,
- das in einem niederen Drehzahlbereich unter hoher Last der Maschine wirksam ist,
- als auch abgasseitig ein Zusatzsteuerorgan (Blende 32) angeordnet ist,
- das bei geringem Ladungsdurchsatz der Maschine wirksam ist.

11. Vorrichtung nach einem der Ansprüche 1 bis 5 und 10, dadurch gekennzeichnet,

- daß das Zusatzsteuerorgan (Blende 6 bzw. 25) um den Schließpunkt des Hauptsteuerorgans (Einlaßventile 4 bzw. 22) schließt.

12. Vorrichtung nach einem oder mehreren der Ansprüche 1 bis 11, dadurch gekennzeichnet,

- daß das Zusatzorgan eine motorisch angetriebene Klappe (42) ist,
- daß der Antriebsmotor (Drehsteller 44) in Abhängigkeit von Kenngrößen der Maschine (Last, Drehzahl, Temperatur, Verbrauch etc.) gesteuert oder geregelt ist und
- die Klappe zwischen vorbestimmten Winkelpositionen in der Leitung (Stutzen 39) periodisch/aperiodisch betätigt.

13. Vorrichtung nach Anspruch 12, dadurch gekennzeichnet, daß die Klappe (42) schwingt bzw. diskontinuierlich betätigt wird.

14. Vorrichtung nach Anspruch 12, dadurch gekennzeichnet, daß die Klappe (42) rotiert bzw. kontinuierlich betätigt wird.

15. Vorrichtung nach einem oder mehreren der Ansprüche 12 bis 14, dadurch gekennzeichnet,

- daß das Zusatzorgan mehrere motorisch angetriebene Klappen (52) umfaßt,

- die in einer Querebene der Leitung (51) zueinander parallel angeordnet sind.

16. Vorrichtung nach den Ansprüchen 12 bis 15, dadurch gekennzeichnet,

- daß der Antriebsmotor (Drehsteller (44) die Klappe (42) mit einer mittleren Mindestwinkelgeschwindigkeit $\omega \simeq 2$ (rad/ms) antreibt und

- die Klappe ferner in einer vorbestimmten Position hält.

17. Vorrichtung nach Anspruch 16, dadurch gekennzeichnet, daß der Antriebsmotor ein elektromagnetischer Drehsteller (44) ist.

Fig.1
0141165

_Fig.1_

_Fig.2_

_Fig.3_

_Fig.4_

- 24 -

0141165

Fig. 5

Fig. 6

Fig.7

4/4

0141165

_Fig. 8_

_Fig. 9_